(19) Europäisches Patentamt
European Patent Office
Office européen des brevets

(11) Veröffentlichungsnummer: **0 076 468**
**A2**

(12) # EUROPÄISCHE PATENTANMELDUNG

(21) Anmeldenummer: **82109037.0**

(22) Anmeldetag: **30.09.82**

(51) Int. Cl.³: **C 08 L 71/02**
C 08 K 5/52, C 08 K 3/32

(30) Priorität: **01.10.81 DE 3139072**

(43) Veröffentlichungstag der Anmeldung:
**13.04.83 Patentblatt 83/15**

(84) Benannte Vertragsstaaten:
**BE CH DE FR GB IT LI NL**

(71) Anmelder: **HOECHST AKTIENGESELLSCHAFT**
**Postfach 80 03 20**
**D-6230 Frankfurt/Main 80(DE)**

(72) Erfinder: **Geymayer, Peter, Dr.**
**Ludwigshafener Strasse 2**
**D-8261 Burgkirchen/Alz(DE)**

(72) Erfinder: **Leidl, Erich**
**Kampenwandstrasse 24**
**D-8261 Burgkirchen/Alz(DE)**

(72) Erfinder: **Minks, Peter**
**Franz-Werfel-Strasse 2b**
**D-8262 Altötting(DE)**

(54) **Verfahren zur Stabilisierung von Ethylenoxidpolyethern.**

(57) Es wird ein Verfahren zum Stabilisieren von Ethylenoxidpolyethern gegen Verfärbung beschrieben. Danach werden den Polyethern Phosphorsäure, Phosphorsäureester oder Mischungen davon in einer jeweils wirksamen Menge zugesetzt.

EP 0 076 468 A2

HOECHST AKTIENGESELLSCHAFT HOE 81/F 921 Dr.GL-ba

Verfahren zur Stabilisierung von Ethylenoxidpolyethern

Die Erfindung betrifft ein Verfahren zur Stabilisierung von Ethylenoxidpolyethern gegen Verfärbung.

Es ist bekannt, daß die an sich farblosen bis leicht gelb gefärbten, flüssigen Ethylenoxidpolyether mehr oder weniger dunkel gefärbt werden, wenn man sie über einen längeren Zeitraum auf eine höhere Temperatur erhitzt und/oder einer Bestrahlung mit kurzwelligem Licht aussetzt. Dieses Nachdunkeln beruht bekanntlich auf einem Zersetzungsprozeß der Polyetherverbindungen, der sowohl in Gegenwart als auch unter Ausschluß von Sauerstoff oder Luft auftritt.
Es liegt auf der Hand, daß insbesondere die Neigung zur thermischen Zersetzung der Ethylenoxidpolyether, wenn sie für längere Zeit bei einer Temperatur von etwa 100 °C und darüber gehalten werden, eine sehr nachteilige Eigenschaft ist, und daß bereits viele Vorschläge zur Farbstabilisierung von Ethylenoxidpolyethern gemacht wurden.

In der deutschen Auslegeschrift 10 90 433 wird empfohlen, bereits bei der Herstellung von Ethylenoxidpolyethern relativ starke Oxidationsinhibitoren bzw. Reduktionsmittel, vorzugsweise Hydrazin, Hydroxylamin, phosphorige Säure und unterphosphorige Säure sowie deren Salze oder Ester, in einer Menge von 0,5 bis 2 Gew.-%, vorzugsweise 0,1 bis 1 Gew.-%, zuzusetzen.

Die Verwendung von phosphoriger Säure als Farbstabilisator für Polyethylenglykole und Polyethylenglykolether wird ferner in der deutschen Offenlegungsschrift 29 35 165 beschrieben. Die phosphorige Säure wird den Polyethern in einer Menge von 0,05 bis 2 Gew.-%, bezogen auf Polyether, zugesetzt.
Es wäre in mehrfacher Hinsicht wünschenswert, anstelle der bekannten reduzierend wirkenden Substanzen andere Verbindungen als Farbstabilisatoren für Polyether zur Verfügung zu haben.

Überraschenderweise wurde gefunden, daß Phosphorsäure, Phosphorsäureester oder Mischungen davon gute Polyether-Farbstabilisatoren sind. Nachdem sowohl in der genannten Auslegeschrift als auch noch in der viel jüngeren genannten Offenlegungsschrift nur reduzierend wirkenden Substanzen, insbesondere der phosphorigen Säure, farbstabilisierende Wirkung bei Polyethern zugeschrieben wird, war nicht zu erwarten, daß auch mit den hinsichtlich Oxidation und Reduktion neutralen erfindungsgemäß vorgeschlagenen Verbindungen eine derartige Wirkung erzielt werden kann.

Das erfindungsgemäße Verfahren zur Stabilisierung von Ethylenoxidpolyethern gegen Verfärbung ist demnach dadurch gekennzeichnet, daß den Ethylenoxidpolyethern eine wirksame Menge von Phosphorsäure und/oder Phosphorsäureestern zugesetzt wird.

Die Phosphorsäure, $H_3PO_4$, auch Orthophosphorsäure genannt, kann als solche oder vorzugsweise als wäßrige Lösung eingesetzt werden. Die wäßrige Lösung ist aus Zweckmäßigkeitsgründen relativ konzentriert, weist also eine Konzentration von etwa 20 bis 85 Gew.-% auf. In der Regel wird demnach die käufliche Phosphorsäure, die bekanntlich eine 85 gew.-%ige wäßrige Lösung ist, oder eine verdünntere wäßrige Lösung eingesetzt werden.

Als Phosphorsäureester werden vorzugsweise aliphatische Phosphorsäureester eingesetzt. Die Phosphorsäureester können Mono- oder Mehrfachester sein, wobei die Mono-, Di- und Triphosphorsäureester oder Mischungen davon bevorzugt sind. Der aliphatische Rest ist vorzugsweise ein Alkylrest mit 1 bis 12 C-Atomen, vorzugsweise 1 bis 4 C-Atomen. Die Phosphorsäureester werden in der Regel als solche eingesetzt.

Die erfindungsgemäß anzuwendende wirksame Menge an Phosphorsäure und/oder Phosphorsäureester kann in weiten Grenzen variieren. Sie beträgt im allgemeinen 0,01 bis 2 Gew.-%, vorzugsweise 0,05 bis 1 Gew.-%, insbesondere 0,1 bis 0,5 Gew.-%, bezogen auf das Gewicht des zu stabilisierenden Ethylenoxidpolyethers.

Nach dem erfindungsgemäßen Verfahren wird Phosphorsäure und/oder Phosphorsäureester in den angegebenen Mengen dem Polyether, der gegen Verfärbung geschützt werden soll, zugesetzt. Das Zusetzen erfolgt zweckmäßigerweise bei Raumtemperatur und unter Rühren. Das erfindungsgemäße Verfahren wird also zweckmäßigerweise derart durchgeführt, daß dem in einem mit Rührer ausgestatteten Gefäß oder Behälter vorgelegten Ethylenoxidpolyether die zur Stabilisierung wirksame Menge an Phosphorsäure und/oder Phosphorsäureester bei Raumtemperatur zugemischt wird. Von den erfindungsgemäß vorgeschlagenen Farbstabilisatoren ist die Phosphorsäure bevorzugt.
Es hat sich gezeigt, daß in den mit Phosphorsäure oder Phosphorsäureestern versetzten Polyethern auch Phosphorsäureester der Polyether enthalten sind. Diese Phosphorsäure-Ethylenglykolester bilden sich offensichtlich durch Umsetzung der zugesetzten Phosphorsäure bzw. durch Umesterung der zugesetzten Phosphorsäureester mit den Polyethern.

Die Art der Ethylenoxidpolyether, die mit dem erfindungsgemäßen Verfahren stabilisiert werden können, ist nicht kritisch.

Im Rahmen der vorliegenden Erfindung werden unter Ethylenoxidpolyether vorzugsweise Polyethylenglykole, Polyethylenglykolether und Polyethylenglykolester verstanden.

Polyethylenglykole sind bekanntlich Verbindungen oder Verbindungsgemische, die durch Polymerisation von Ethylenoxid erhalten werden und der allgemeinen Formel

$$HO(CH_2CH_2O)_xH$$

entsprechen, worin x für die Zahl der polymerisierten Ethylenoxid-Einheiten steht. Diese Zahl kann innerhalb weiter Grenzen variieren.

Für die erfindungsgemäße Stabilisierung kommen vorzugsweise solche Polyethylenglykole in Betracht, deren Molekulargewicht 100 bis 3000, vorzugsweise 200 bis 1000, beträgt. Der Siedepunkt dieser Polyethylenglykole liegt über 200 °C.

Polyethylenglykolether sind bekanntlich Ethylenoxid-Addukte, die durch Umsetzung von Ethylenoxid mit aktive Wasserstoffatome tragenden Verbindungen erhalten werden, beispielsweise Addukte von Ethylenoxid an 1- bis 6wertige aliphatische Alkohole.

Für die erfindungsgemäße Stabilisierung kommen vorzugsweise solche Polyethylenglykolether in Betracht, die durch Anlagerung von 3 bis 30 Ethylenoxid-Einheiten an einwertige aliphatische Alkohole mit 1 bis 22 C-Atomen oder an mehrwertige aliphatische Alkohole mit 3 bis 6 C-Atomen erhalten werden. Einwertige aliphatische Alkohole sind vorzugsweise Alkanole oder Alkenole (mit 1 bis 3 Doppelbindungen) mit 1 bis 22, vorzugsweise 6 bis 18 C-Atomen (Fettalkohole). Mehrwertige aliphatische Alkohole sind vorzugsweise 3- bis 6wertige aliphatische Alkohole mit 3 bis 6 C-Atomen wie Glycerin, Erythrit, Pentaerythrit, Trimethylolethan, Trimethylolpropan,

Pentite und Hexite.
Die für die erfindungsgemäße Stabilisierung in Betracht kommenden Polyethylenglykolether haben ein Molekulargewicht im allgemeinen von etwa 150 bis 5000, vorzugsweise von 200 bis 3000. Ihr Siedepunkt liegt über 200 °C.

Polyethylenglykolester sind bekanntlich Umsetzungsprodukte von Polyethylenglykolen oder Polyethylenglykolethern mit organischen Säuren.
Für die erfindungsgemäße Stabilisierung kommen vorzugsweise solche Polyethylenglykolester in Betracht, die durch Umsetzung der obengenannten Polyethylenglykole und Polyethylenglykolether mit aliphatischen Carbonsäuren mit 1 bis 22, vorzugsweise 6 bis 18 C-Atomen, also mit Fettsäuren erhalten werden. Bei den Polyethylenglykolestern kann es sich um Mono- oder um Mehrfachester wie Diester und Triester handeln. In der Regel liegt ein Gemisch von Mono-, Di- und Triestern vor. Die Molekulargewichte der Polyethylenglykolester betragen im allgemeinen etwa 150 bis 5000, vorzugsweise 200 bis 3000. Ihr Siedepunkt liegt im allgemeinen über 200 °C.

Die Erfindung wird nun an Beispielen noch näher erläutert.

Beispiele

Jeweils 50 g Ethylenoxidpolyether, die 0,05 g (das sind 0,1 Gew.-%), 0,0125 g (das sind 0,25 Gew.-%) oder 0,25 g (das sind 0,5 Gew.-%) an Farbstabilisator enthielten, wurden 24 Stunden lang in einem Trockenschrank bei 160 °C. gelagert.
Es wurden die nachstehenden Ethylenoxidpolyether und Farbstabilisatoren getestet.

Ethylenoxidpolyether:

1 Polyethylenglykol vom Molekulargewicht 400
2 Polyethylenglykol vom Molekulargewicht 4000
3 Glycerinoxethylat mit 12 Ethylenoxid-Einheiten pro Mol Glycerin
4 ethoxylierter Talgfettalkohol mit 25 Ethylenoxid-Einheiten pro Mol Talgfettalkohol.

Farbstabilisatoren:

Phosphorige Säure (als Vergleich), Phosphorsäure und ein Gemisch aus Mono- und Di-isopropylphosphorsäureester (abgekürzt: MDIP).
Es wurde auch ein Blindversuch durchgeführt.
Nach der Lagerung im Trockenschrank wurde bei jeder Probe der Grad der Färbung durch die Iodzahl nach DIN 53 403 bestimmt.

In der folgenden Tabelle sind die Ergebnisse zusammengefaßt.

T A B E L L E

| Ethylenoxid-polyether | Blind-versuch | Phosphorige Säure 0,1 Gew.-% | 0,25 Gew.-% | Phosphorsäure 0,1 Gew.-% | 0,25 Gew.-% | MDIP 0,25 Gew.-% | 0,5 Gew.-% |
|---|---|---|---|---|---|---|---|
| 1 | 3 | 1 | 2 | < 1 | 1 | 1 | 2 |
| 2 | 80 | 4 | 4 | 2 | 4 | 1 | 2 |
| 3 | 80 | 22 | 23 | 15 | 19 | 17 | 17 |
| 4 | 60 | 12 | 4 | 15 | 3 | 5 | 5 |

Die Ergebnisse der Beispiele zeigen, daß die erfindungsgemäß vorgeschlagenen Farbstabilisatoren teilweise einen sogar höheren Stabilisierungseffekt ausüben als die reduzierend wirkende phosphorige Säure. Dieses Ergebnis war nicht vorhersehbar, da nach dem Stand der Technik von Substanzen, die hinsichtlich Oxidation und Reduktion neutral sind, keine farbstabilisierende Wirkung bei Ethylenoxidpolyethern zu erwarten war.

Patentansprüche

1. Verfahren zur Stabilisierung von Ethylenoxidpolyethern gegen Verfärbung, dadurch gekennzeichnet, daß den Ethylenoxidpolyethern eine wirksame Menge von Phosphorsäure und/oder Phosphorsäureestern zugesetzt wird.

2. Verfahren nach Anspruch 1, dadurch gekennzeichnet, daß eine Menge von 0,01 bis 2 Gew.-%, bezogen auf das Gewicht an Ethylenoxidpolyether, zugesetzt wird.

3. Verfahren nach Anspruch 1, dadurch gekennzeichnet, daß als Phosphorsäureester aliphatische Mono-, Di- oder Triphosphorsäureester oder eine Mischung davon eingesetzt wird, wobei der aliphatische Rest ein Alkylrest mit 1 bis 12 C-Atomen ist.

4. Verfahren nach Anspruch 1, dadurch gekennzeichnet, daß als Farbstabilisator eine wäßrige Lösung von Phosphorsäure eingesetzt wird.